# EUROPÄISCHE PATENTANMELDUNG

(11) **EP 3 193 301 A1**
(43) Veröffentlichungstag der Anmeldung: **19.07.2017**
(21) Anmeldenummer: 16151485.6
(22) Anmeldetag: 15.01.2016
(51) Int. Cl.: G06Q 30/02

(54) **DATENVERARBEITUNGSSYSTEM UND VERFAHREN ZUR INTEGRATION VON DATEN MIT EINER ÜBERGEORDNETEN ANWENDUNGSPROGRAMMIERSCHNITTSTELLE UND AUSGABE DER DATEN IN EINEM EINHEITLICHEN FORMAT**

(71) Anmelder: LIVE! L-Box GmbH, 8808 Pfäffikon (CH)
(72) Erfinder: Plecic, Sam, 8424 Embrach (CH); Greber, Guido, 8006 Zürich (CH)
(74) Vertreter: Kiwit, Benedikt

(57) **Zusammenfassung**

In einem ersten Aspekt wird ein Datenverarbeitungssystem bereitgestellt zum Verbinden wenigstens eines Telekommunikationsendgeräts mit Infrastruktursystemen, insbesondere Veranstaltungsinfrastruktursystemen, aufweisend ein Server, auf dem eine übergeordnete Anwendungsprogrammierungsschnittstelle implementiert ist,
wobei die übergeordnete Anwendungsprogrammierungsschnittstelle dazu eingerichtet ist, einen Zugang zu wenigstens einem Teil der Infrastruktursysteme, die innerhalb eines definierten Bereichs vorgesehen sind, und/oder zu softwaretechnischen Diensten, die mittels verschiedener Anwendungsprogrammierungsschnittstellen bereitgestellt sind, bereitzustellen, wobei der Zugang für einen Zugriff ausgehend von dem wenigstens einen, insbesondere mobilen, Telekommunikationsendgerät ausgestaltet ist, und wobei die übergeordnete Anwendungsprogrammierungsschnittstelle dazu eingerichtet ist, Daten zur Ausgabe an die verschiedenen Anwendungsprogrammierungsschnittstellen, die Infrastruktursysteme und/oder das wenigstens eine Telekommunikationsendgerät zu konvertieren, wobei die übergeordnete Anwendungsprogrammierungsschnittstelle dazu eingerichtet ist, an das wenigstens eine Telekommunikationsendgerät auszugebende Daten in ein einheitliches Format zu konvertieren.

## Beschreibung

Die Erfindung betrifft ein Datenverarbeitungssystem und ein Verfahren zum Betrieb eines Datenverarbeitungssystems. Insbesondere betrifft die Erfindung ein Datenverarbeitungssystem, das es erlaubt, wenigstens ein Telekommunikationsendgerät mit Infrastruktursystemen und/oder softwaretechnischen Diensten zu verbinden. Vorzugsweise wird auf von dem Datenverarbeitungssystem bzw. dem Verfahren bereitgestellte Daten durch einen Benutzer zugegriffen. Dabei ist das Datenverarbeitungssystem in der Lage, einen Zugriff des Benutzers von außerhalb oder innerhalb eines definierten Bereichs zu unterscheiden.

Das Datenverarbeitungssystem stellt eine computerbasierte übergeordnete Anwendungsprogrammierungsschnittstelle bereit, die durch eine oder eine Kombination von Programmiersprachen implementiert werden kann, z.B. mittels Java, PHP, ASP, JNode, JavaScript, Ruby, Rust, Go, JSON, XML, etc..

Das Datenverarbeitungssystem ist besonders für den Einsatz an/in einem Veranstaltungsort, beispielsweise einem Stadion, einer Konzerthalle, einem Festivalgelände, oder ähnlichem vorgesehen. Das Datenverarbeitungssystem stellt die übergeordnete Anwendungsprogrammierungsschnittstelle als eine Datenstruktur bereit, auf die ein Benutzer über ein vorzugsweise mobiles Kommunikationsendgerät direkt oder indirekt zugreifen kann.

Unter einem direkten Zugriff ist dabei zu verstehen, dass die übergeordnete Anwendungsprogrammierungsschnittstelle eine Benutzerschnittstelle bereitstellt, die dem Benutzer dargestellt werden kann, und über die Eingaben des Benutzers entgegengenommen werden können. Beispielsweise können Benutzerschnittstellenkomponenten der Benutzerschnittstelle in der übergeordneten Anwendungsprogrammierungsschnittstelle eingebettet sein und von dieser bereitgestellt werden. Dem Benutzer können die Benutzerschnittstellenkomponenten dann zugänglich gemacht bzw. angezeigt werden, wenn der Benutzer z.B. mittels eines HTML-Browsers oder via Native App (d.h. Smartphones) auf die übergeordnete Anwendungsprogrammierungsschnittstelle zugreift.

Unter einem indirekten Zugriff soll verstanden werden, dass zwischen der übergeordneten Anwendungsprogrammierungsschnittstelle und dem Benutzer weitere funktionale Module zum Einsatz kommen können. So kann die übergeordnete Anwendungsprogrammierungsschnittstelle z.B. lediglich die Daten bereitstellen, die für eine Ausgabe an den Benutzer vorgesehen sind. Die eigentliche Darstellung für den Benutzer kann dann jedoch durch die weiteren funktionalen Module erfolgen, z.B. durch eine Applikation, die auf einem Telekommunikationsendgerät des Benutzers ausführbar wird. Die Eingabe des Benutzers kann dann über die Applikation erfolgen. Die Applikation sendet die resultierenden Anfragedaten an die übergeordnete Anwendungsprogrammierungsschnittstelle.

Als weitere funktionales Modul kann jedoch auch beispielsweise eine Anwendung dienen, die, wie die Applikation, von der übergeordneten Anwendungsprogrammierungsschnittstelle bereitgestellte Daten zur Darstellung aufbereitet und darstellt. Diese Anwendung kann dann passende Benutzerschnittstellenkomponenten erzeugen. Ein weiteres Beispiel für ein solches Funktionales Modul ist eine Web-Schnittstelle, die z.B. XML-Daten als Antwort auf Anfragedaten entgegennimmt und zur Darstellung aufbereitet.

Durch die Verwendung der übergeordneten Anwendungsprogrammierungsschnittstelle bietet das Datenverarbeitungssystem die Möglichkeit, Daten von softwaretechnischen Dienste und/oder Infrastruktursystemen zu integrieren und für den Benutzer zentral und einheitlich verfügbar zu machen. Das Bedeutet, das Daten von den softwaretechnischen Diensten und/oder Infrastruktursystemen von der übergeordneten Anwendungsprogrammierungsschnittstelle empfangen oder abgefragt und/oder an diese gesendet werden können.

Das Datenverarbeitungssystem kann unterscheiden, ob sich der Benutzer innerhalb eines definierten Bereiches, d.h. z.B. innerhalb des Bereiches einer Veranstaltung oder innerhalb der Grenzen eines Veranstaltungsortes befindet oder nicht. Abhängig davon können dann dem Benutzer verschiedene Daten bereitgestellt werden. Insbesondere können durch die übergeordnete Anwendungsprogrammierungsschnittstelle integrierte und bereitgestellte Daten abhängig davon zugänglich gemacht werden, ob sich ein Benutzer innerhalb oder außerhalb des definierten Bereichs befindet. Dabei wird insbesondere eine Position oder Lokation eines Telekommunikationsendgerätes durch das Datenverarbeitungssystem und/oder die übergeordnete Anwendungsprogrammierungsschnittstelle ausgewertet. Anhand der Lokation kann dann eine Auswahl von dem Benutzer zugänglichgemachten Daten erfolgen. Die Begriffe Position und Lokation werden im Folgenden synonym verwendet.

Es können durch das Datenverarbeitungssystem nicht nur Daten von softwaretechnischen Diensten bzw. Infrastruktursystemen integriert und Daten mit dem wenigstens einen Benutzer ausgetauscht werden. Das Datenverarbeitungssystem kann auch Schnittstellen und vorzugsweise Kommunikationsschnittstellen aufweisen und bereitstellen, die eine Anbindung von Infrastruktursystemen, softwaretechnischen Diensten und/oder Benutzern an beispielsweise Telekommunikationssysteme ermöglicht. Insbesondere verbindet das Datenverarbeitungssystem jedoch Benutzer, die Infrastrukturkomponenten und/oder die softwaretechnischen Dienste bzw. deren Anbieter untereinander und erlaubt einen Datenaustausch zwischen diesen. Beispielsweise kann so ein Veranstaltungsbesucher, d.h. ein Benutzer, mit Infrastruktursystemen eines Stadions (beispielsweise Werbeanzeigen, Banden, Akustische- und/oder Anzeigesysteme) datentechnisch verbunden werden, wenn dieser sich innerhalb des Stadions aufhält. Befindet sich der Benutzer außerhalb des Stadions so können ihm zusätzlich oder alternativ andere Dienste bereitgestellt werden, beispielsweise Verkaufsangebote (Merchandising) und/oder die Möglichkeit zum Erwerb einer Zugangsberechtigung (Ticketing).

Ziel der Erfindung ist es weiter, bereits verfügbare Insellösungen in dem Datenverarbeitungssystem zusammenzuführen. Daten und Systeme für den mobilen Zahlungsverkehr (mobile payment) können durch das Datenverarbeitungssystem integriert und ein einfacher dazu kann ermöglicht werden. Bekannte Anbieter auf diesem Gebiet sind z.B. PayPal, Sandpiper, PostFinance, MasterCard und andere. Der Verkauf von Zugangsberechtigungen kann von bekannten Anbietern wie Skidata & Ticketcorner und andere erfolgen. Das Datenverarbeitungssystem integriert weiter softwaretechnische Dienste, wie beispielsweise das Videostreaming (bekannt sind hier beispielsweise Twitch, YouTube, oder ZATTOO), positions- oder lokationsabhängige Dienste (beispielsweise Kartendienste oder Dienste, die aktuelle Informationen bezüglich einer Position anzeigen wie Yelp, GoogleMaps, Here, BingMaps), soziale Medien und Gemeinschaften (Social Media und Social Communities wie Facebook, Twitter Google+, Instagram, Pinterest), elektronischen Sport (Anbieter sind hier z.B. Zynga, EA Sports, Nintendo, etc.) und/oder Kommunikationslösungen (wie sie beispielsweise von Cisco, Ericsson, Huawei, Hewlett-Packard Enterprise und anderen bereitgestellt werden).

Nachteilig ist, dass keine unabhängige Lösung existiert, die alle diese Dienste integriert und Daten so aufbereitet, dass sie in ein einheitliches Format überführt oder konvertiert werden. Das erfindungsgemäße Datenverarbeitungssystem biete eine solche Lösung und stellt die Daten so bereit, dass sie zentral für den Benutzer zugreifbar sind, vorzugsweise dadurch, dass der Benutzer lediglich mit der übergeordneten Anwendungsprogrammierungsschnittstelle interagieret, um so Zugriff auf die Daten zu erhalten.

Zudem erlaubt die erfindungsgemäße Lösung einen Zugriff über mobile Telekommunikationsnetze, auch wenn vor Ort eine Verfügbarkeit von drahtlosen Kommunikationsnetzwerken, wie WLAN-/WIFI-Netzwerken, nicht gegeben ist. Der Zugang erfolgt dann beispielsweise über Telekommunikationsnetze mittels drahtloser Datenübertragung (z.B. mittels GRPS, GSM, 3G, 4G, 5G).

Weiter erlaubt das erfindungsgemäße Datenverarbeitungssystem, dass sowohl Anwender innerhalb und außerhalb des definierten Bereichs miteinander kommunizieren, interagieren und Daten austauschen. Hierbei wird eine Lösung ohne Medienbruch bereitgestellt und eine bidirektionale Kommunikation der Benutzer mit dem Datenverarbeitungssystem, der übergeordneten Anwendungsprogrammierungsschnittstelle, den softwaretechnischen Diensten und/oder den Infrastruktursystemen ermöglicht.

Ein weiteres Ziel der Erfindung ist es, für den Benutzer eine einheitliche Benutzerschnittstelle und einen einzigen Zugang zu allen für ihn relevanten Daten bezüglich eines Ereignisses bzw. einer Veranstaltung bereitzustellen. Vorzugsweise werden darüber in Echtzeit Daten zu einem Ereignis bzw. einer Veranstaltung für den Benutzer verfügbar bzw. zugreifbar gemacht. Eine Unterscheidung kann dabei dahingehend erfolgen, ob sich ein Benutzer innerhalb oder außerhalb eines für die Veranstaltung bzw. das Ereignis definierten Bereichs befindet.

Es wird daher ein Datenverarbeitungssystem, ein computerlesbares Medium und ein Verfahren gemäß der unabhängigen Ansprüche bereitgestellt. Weiterbildungen der Erfindung sind Gegenstand der abhängigen Ansprüche.

In einem ersten Aspekt wird ein Datenverarbeitungssystem bereitgestellt zum Verbinden wenigstens eines Telekommunikationsendgeräts mit Infrastruktursystemen, insbesondere Veranstaltungsinfrastruktursystemen, aufweisend ein Server, auf dem eine übergeordnete Anwendungsprogrammierungsschnittstelle implementiert ist, wobei die übergeordnete Anwendungsprogrammierungsschnittstelle dazu eingerichtet ist, einen Zugang zu wenigstens einem Teil der Infrastruktursysteme, die innerhalb eines definierten Bereichs vorgesehen sind, und/oder zu softwaretechnischen Diensten, die mittels verschiedener Anwendungsprogrammierungsschnittstellen bereitgestellt sind, bereitzustellen, wobei der Zugang für einen Zugriff ausgehend von dem wenigstens einen, insbesondere mobilen, Telekommunikationsendgerät ausgestaltet ist, und wobei die übergeordnete Anwendungsprogrammierungsschnittstelle dazu eingerichtet ist, Daten zur Ausgabe an die verschiedenen Anwendungsprogrammierungsschnittstellen, die Infrastruktursysteme und/oder das wenigstens eine Telekommunikationsendgerät zu konvertieren, wobei die übergeordnete Anwendungsprogrammierungsschnittstelle dazu eingerichtet ist, an das wenigstens eine Telekommunikationsendgerät auszugebende Daten in ein einheitliches Format zu konvertieren.

Die übergeordnete Anwendungsprogrammierungsschnittstelle kann den Zugang für das wenigstens eine Telekommunikationsendgerät innerhalb und außerhalb des definierten Bereichs bereitstellen.

Die übergeordnete Anwendungsprogrammierungsschnittstelle kann den Zugang zu den softwaretechnischen Diensten und/oder den Infrastruktursystemen selektiv bereitstellen. Die übergeordnete Anwendungsprogrammierungsschnittstelle kann den Zugang insbesondere abhängig davon bereitstellen, ob das wenigstens eine Telekommunikationsendgerät von innerhalb oder außerhalb des definierten Bereichs zugreift.

Die übergeordnete Anwendungsprogrammierungsschnittstelle kann Daten von den verschiedenen Anwendungsprogrammierungsschnittstellen, den Infrastruktursystemen und/oder dem wenigstens einen Telekommunikationsendgerät empfangen. Die übergeordnete Anwendungsprogrammierungsschnittstelle kann Daten an die verschiedenen Anwendungsprogrammierungsschnittstellen, die Infrastruktursysteme und/oder das wenigstens eine Telekommunikationsendgerät senden.

Die übergeordnete Anwendungsprogrammierungsschnittstelle kann den Zugang zu den softwaretechnischen Diensten und/oder den Infrastruktursystemen abhängig von der Lokation des wenigstens einen Telekommunikationsendgeräts, insbesondere innerhalb des definierten Bereichs, bereitstellen.

Die übergeordnete Anwendungsprogrammierungsschnittstelle kann Daten von dem wenigstens einen Telekommunikationsendgerät, den Infrastruktursystemen und/oder den verschiedenen Anwendungsprogrammierungsschnittstellen verarbeiten und/oder die Daten mit zusätzlichen Informationen kombinieren und vorzugsweise als einheitliche Datenbasis bereitstellen.

Die übergeordnete Anwendungsprogrammierungsschnittstelle kann Daten an das wenigstens eine Telekommunikationsendgerät in Echtzeit ausgeben.

Die übergeordnete Anwendungsprogrammierungsschnittstelle kann Daten mit den verschiedenen Anwendungsprogrammierungsschnittstellen zu bestimmten Zeitpunkten austauschen und insbesondere abgleichen.

Das Datenverarbeitungssystem kann wenigstens eine Applikation umfassen, die auf dem wenigsten einen mobilen Telekommunikationsendgerät ausführbar ist, insbesondere zur Wiedergabe der von der übergeordneten Anwendungsprogrammierungsschnittstelle bereitgestellten Daten.

Die Veranstaltungsinfrastruktursysteme können Anzeigegeräte, Sensoren, und/oder Effektoren umfassen.

Die softwaretechnischen Dienste können Merchandising-Dienste, Ticketing-Dienste, Social Media-Dienste, Spiele-Dienste, Telekommunikations-Dienste, Lokations-Dienste, Video Streaming-Dienste, Wett-Dienste, Statistik-Dienste, Bezahl-Dienste und/oder Registrierungs-Dienste umfassen.

Das wenigstens eine Telekommunikationsendgerät kann ein Smartphone, ein Tablet und/oder ein Laptop sein.

In einem weiteren Aspekt wird ein Verfahren zum Verbinden wenigstens eines Telekommunikationsendgeräts mit Infrastruktursystemen, insbesondere Veranstaltungsinfrastruktursystemen, bereitgestellt,
wobei eine übergeordnete Anwendungsprogrammierungsschnittstelle eines Datenverarbeitungssystems einen Zugang zu wenigstens einem Teil der Infrastruktursysteme, die innerhalb eines definierten Bereichs vorgesehen sind, und/oder zu softwaretechnischen Diensten, die mittels verschiedener Anwendungsprogrammierungsschnittstellen bereitgestellt werden, bereitstellt, wobei der Zugang für einen Zugriff von den insbesondere mobilen Telekommunikationsendgeräten ausgestaltet ist, und wobei die übergeordnete Anwendungsprogrammierungsschnittstelle Daten zur Ausgabe an die verschiedenen Anwendungsprogrammierungsschnittstellen, die Infrastruktursysteme und/oder das wenigstens eine Telekommunikationsendgerät konvertiert, wobei die an das wenigstens eine Telekommunikationsendgerät auszugebenden Daten in ein einheitliches Format konvertiert werden.

In noch einem weiteren Aspekt wird ein computerlesbares Medium bereitgestellt, auf dem ein Computerprogrammprodukt gespeichert ist, das bei Ausführung durch ein Datenverarbeitungssystem ein Verfahren ausführt, wie es hierin beschrieben ist.

Die Erfindung wird nunmehr auch mit Blick auf die Figuren beschrieben. Dabei zeigen:
- Fig. 1: einen schematischen Überblick über das erfindungsgemäße Datenverarbeitungssystem,
- Fig. 2: ein Blockschaltbild mit einer Teilansicht des erfindungsgemäßen Datenverarbeitungssystems,
- Fig. 3: ein Flussdiagramm, das schematisch einen Zugriff eines Benutzers auf das erfindungsgemäße Datenverarbeitungssystem z.B. mit einer Applikation zeigt, und
- Fig. 4: eine weitere schematische Teilansicht des erfindungsgemäßen Datenverarbeitungssystems.

Das erfindungsgemäße Datenverarbeitungssystem integriert also softwaretechnische Dienste und/oder Infrastruktursysteme und dabei insbesondere Veranstaltungssysteme wie Anzeigen, Audiosysteme, Videosysteme, Public Address (PA)-Systeme, usw. dadurch, dass das Datenverarbeitungssystem mit dem softwaretechnischen Diensten und/oder den Infrastruktursystemen Daten austauscht. Der Austausch der Daten erfolgt dabei im Wesentlichen über drahtlose und/oder drahtgebundene Kommunikationsnetzwerke. Diese Kommunikationsnetzwerke können eine Vielzahl von Kommunikationsnetzwerkkomponenten wie Router, Gateways, Switches, Repeater, sowie Kombinationen physischer Träger, wie Luft, Kupfer, Silicate, umfassen.

Das Datenverarbeitungssystem verwendet zum Datenaustausch insbesondere auch durch die Infrastruktursysteme und/oder die softwaretechnischen Dienste bereitgestellte Anwendungsprogrammierungsschnittstellen, um Daten und Anfragen an diese zu übermitteln, bzw. Daten und Antworten von diesen zu erhalten. Auch kann das Datenverarbeitungssystem auf die Infrastruktursysteme und/oder die softwaretechnischen Dienste abgestimmte Kommunikationsprotokolle für den Datenaustausch einsetzen. Beispiele hierfür können HTTPS(s), (s)FTP, ssh, telnet, FISH, RSH, RPCs, usw. sein.

Die von den Infrastruktursystemen und/oder softwaretechnischen Diensten erhaltenen bzw. abgefragten Daten werden dann durch das Datenverarbeitungssystem verarbeitet und insbesondere so umgeformt bzw. konvertiert, dass sie in einem einheitlichen Format, bereitgestellt werden können, z.B. in wenigstens einer Datenbank, einem Key-Value-Speicher und/oder als wenigstens eine XML-Datei.

Auch eine Kommunikation von dem Datenverarbeitungssystem zu den Infrastruktursystemen bzw. softwaretechnischen Diensten wird dadurch ermöglicht, dass das Datenverarbeitungssystem über die bereitgestellten Anwendungsprogrammierungsschnittstellen Daten bidirektional mit den Infrastruktursystemen und/oder softwaretechnischen Diensten austauschen kann. Dem Benutzer kann durch das Datenverarbeitungssystem und/oder die übergeordnete Anwendungsprogrammierungsschnittstelle eine Benutzerschnittstelle, insbesondere eine Webschnittstelle, App, GUI (Graphical User Interface) in benutzerfreundlicher Form dargestellt werden.

Das Datenverarbeitungssystem kann insbesondere die übergeordnete Anwendungsprogrammierungsschnittstelle ausführen, über die die integrierten bzw. durch das Datenverarbeitungssystem verarbeiteten Daten zugreifbar sind. Die übergeordnete Anwendungsprogrammierungsschnittstelle des Datenverarbeitungssystems nimmt Daten, vorzugsweise Anfragedaten oder Antwortdaten auf Anfragen, eines Benutzers, eines softwaretechnischen Dienstes und/oder eines Infrastruktursystems entgegen. Diese Daten setzt die übergeordnete Anwendungsprogrammierungsschnittstelle für verschiedene Anwendungsprogrammierungsschnittstellen passend für die softwaretechnischen Dienste, die Infrastruktursysteme und/oder zur Übermittlung an den Benutzer um. Die beteiligten softwaretechnischen Dienste und/oder die Infrastruktursysteme können dabei von der übergeordneten Anwendungsprogrammierungsschnittstelle abhängig von insbesondere den Anfragedaten gewählt werden.

Insofern wird durch das Datenverarbeitungssystem eine abgestimmte Kommunikation mit den Anwendungsprogrammierungsschnittstellen der Infrastruktursysteme bzw. softwaretechnischen Dienste bereitgestellt. Damit kann für jeden softwaretechnischen Dienst bzw. jedes Infrastruktursystem ein Kommunikationsmodul implementiert werden, so dass insgesamt eine modulare Gestaltung des Datenverarbeitungssystems möglich ist. Insbesondere können die Kommunikationsmodule abhängig von dem Umfeld des Datenverarbeitungssystems angepasst und implementiert werden, z.B. abhängig von dem Veranstaltungs- oder Einsatzort, den beteiligten bzw. vorhandenen softwaretechnischen Diensten und/oder den Infrastruktursystemen.

Dabei ist zu verstehen, dass die Kommunikationsmodule auch als Hardwareschnittstellen vorgesehen sein können, die es erlauben, besonders die Infrastruktursysteme mit dem Datenverarbeitungssystem zu verbinden. Es können auch andere Funktionalitäten des Datenverarbeitungssystems als Modul implementiert werden. So kann beispielsweise ein Abstimmungs-Modul oder Diskussions-Modul implementiert sein, dass es erlaubt die Bewertung bzw. Meinung von Benutzern bezüglich eines bestimmten Themas entgegenzunehmen, abzuspeichern, zu aggregieren und/oder auszuwerten.

Benutzer können auch in Benutzergruppen verwaltet werden oder bestimmten Benutzergruppen zugeordnet werden, die sich beispielsweise von anderen Benutzern durch ihre Lokation oder eine Auszeichnung (z.B. Partner, Premium Partner, VIP, etc.) unterscheiden. Insbesondere ist einem Benutzer ein Benutzerprofil zugeordnet, in dem mit dem Benutzer assoziierte Benutzerdaten abrufbar gespeichert sind.

Folglich ermöglicht das System einen integrierten Zugriff auf verschiedene Infrastruktursysteme und softwaretechnische Dienste über einen einzigen Zugang und insbesondere über die einzige übergeordnete Anwendungsprogrammierungsschnittstelle. Somit wird eine zentrale Kommunikation des Benutzers bezüglich des Ereignisses bzw. der Veranstaltung ermöglicht.

Das Datenverarbeitungssystem kann vor allem bei Veranstaltungen aus Bereichen des Sports, der Kultur sowie für Firmenereignisse eingesetzt werden. Benutzer, d.h. z.B. Besucher einer Veranstaltung, nutzen Telekommunikationsendgeräte, wie z.B. Smartphones, Tablets, PCs, Laptops, etc., um auf das Datenverarbeitungssystem zuzugreifen. Dafür ist das Datenverarbeitungssystem insbesondere für den Zugriff von mobilen Telekommunikationsendgeräten ausgelegt. Insbesondere werden auch positionsabhängige Daten bereitgestellt, die unter Verwendung von Positionierungssensoren der Telekommunikationsendgeräte (beispielsweise für GPS, Galileo, GLONASS, Beidou, WLAN-Triangulation, Sendezellen, etc.) Positionsinformationen erfassen können. Durch das Datenverarbeitungssystem verwertete, verarbeitete, bereitgestellte und empfangene Daten können auch von einem Veranstalter und/oder dem Benutzer zur Verfügung gestellt werden. Die von dem Datenverarbeitungssystem zur Verfügung gestellten Daten können insbesondere in Form von Textdaten, Bild- und/oder Audiodaten ausgegeben werden.

Benutzer außerhalb des definierten Bereiches können mit Benutzern innerhalb des definierten Bereiches mittels der übergeordneten Anwendungsprogrammierungsschnittstelle kommunizieren und gemeinsam Informationen nutzen und austauschen. So ist es beispielsweise auch möglich, dass Inhalte des Ereignisses bzw. der Veranstaltung an Benutzer, die sich außerhalb des definierten Bereiches befinden, wiederum vorzugsweise in Echtzeit, übertragen werden. Dabei kann es sich um Daten über das Ereignis handeln (beispielsweise Spielstände, Live-Bilder, Abstimmungsergebnisse, etc.). Insbesondere ist es dem Benutzer ermöglicht, sich für den Erhalt von Informationen von einer Benutzergruppe anzumelden oder zu abonnieren, beispielsweise von einer Fan-Gruppe eines Vereins oder einer Band, um so aktuelle Informationen bezüglich des Vereins/der Musikgruppe zu erhalten.

Der Benutzer muss somit nicht länger auf Einzel-/Insellösungen zurückgreifen, sondern ihm können die gewünschten Informationen bereits fertig aufbereitet durch die übergeordnete Anwendungsprogrammierungsschnittstelle zur Verfügung gestellt werden. Insofern geht die erfindungsgemäße Lösung über bestehende soziale Medienangebote und Customer-Relationship, Managementsysteme hinaus.

Auch die Verknüpfung des Benutzers mit Ligen, z.B. mit Ballsport-Ligen, wie einer Fußball-Liga oder einer Basketball-Liga, können mit dem Benutzer verknüpft und durch das Datenverarbeitungssystem verwaltet werden. Der Benutzer kann dann aktuelle Informationen dadurch erhalten, dass das Datenverarbeitungssystem z.B. Push-Nachrichten an das Telekommunikationsendgerät des Benutzers sendet, oder die Applikation in zeitlichen Abständen die Informationen bei dem Datenverarbeitungssystem abfragt. Dem Benutzer können auch Informationen zu Catering und Wettangeboten bereitgestellt werden.

Dabei ist die Lösung anders als gängige Lösungen, die unabhängig und spezifisch auf bestimmte Aspekte des Eventbetriebs gerichtet sind, eine integrierte Lösung. Der Mehrwert ist hier darin zu sehen, dass technische Einzellösungen in ein System integriert werden und insbesondere ein Zahlungsverkehr zentral über das Datenverarbeitungssystem abgewickelt werden kann. Somit werden technologisch unterschiedliche Systeme (beispielsweise auch aus der Gebäudetechnik, der Gastronomie, des Glückspiels sowie andere) durch das Datenverarbeitungssystem einheitlich zugänglich gemacht.

Genauer gesagt wird also ein Datenverarbeitungssystem zum Verbinden wenigstens eines Telekommunikationsendgeräts mit Infrastruktursystemen bereitgestellt, wobei es sich bei den Infrastruktursystemen insbesondere um Veranstaltungsinfrastruktursysteme handelt. Hierbei handelt es sich vorzugsweise um Sensoren, Aktoren, Effektoren, Aufnahme- und/oder Ausgabegeräte, die Konzerten, in Stadion oder Messen zum Einsatz kommen können.

Das Datenverarbeitungssystem weist weiter wenigstens eine Speichereinheit und vorzugsweise wenigstens eine Datenbank auf, in die von der übergeordneten Anwendungsprogrammierungsschnittstelle Daten gespeichert und aus der die übergeordnete Anwendungsprogrammierungsschnittstelle Daten auslesen kann. Durch die Kommunikation mit den verschiedenen Anwendungsprogrammierungsschnittstellen der softwaretechnischen Dienste und/oder der Infrastruktursysteme können zwischen diesen und dem Datenverarbeitungssystem Daten abgeglichen werden. Somit werden verteilte Daten aktuell gehalten. Das Datenverarbeitungssystem besteht insbesondere aus einem oder mehreren Rechensystemen oder Servern. Unter softwaretechnischen Diensten sind allgemein Computerprogrammprodukte zu verstehen, die einen automatisierten Datenaustausch mit entfernten Rechensystemen über jeweils eine definierte Anwendungsprogrammierungsschnittstelle erlauben.

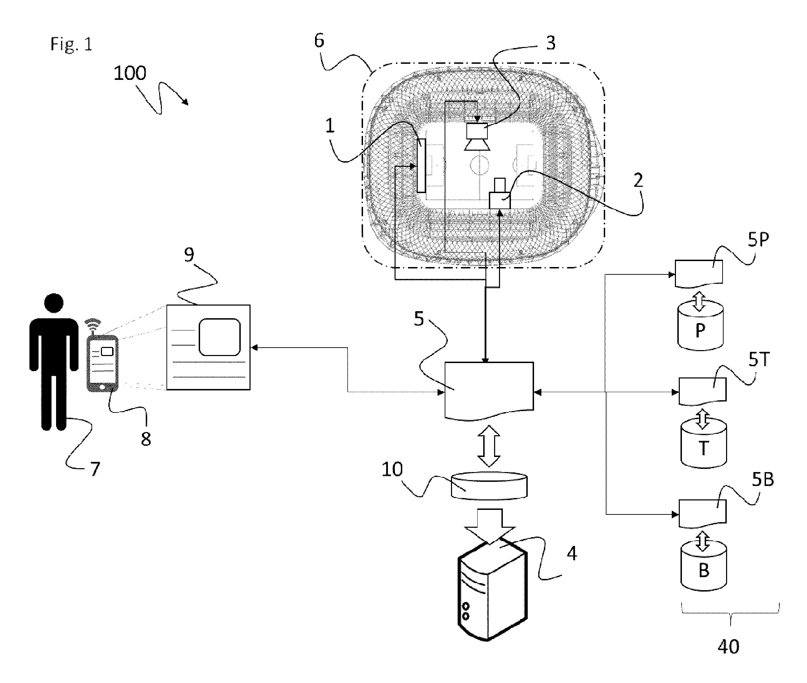

In Fig. 1 ist exemplarisch ein Datenverarbeitungssystem 100 gemäß der Erfindung schematisch gezeigt. Exemplarisch ist eine Stadionumgebung gezeigt, die mit mehreren Infrastruktursystemen 1-3 ausgestattet ist. Beispielhaft sind als Infrastruktursysteme eine Anzeigeeinheit 1 zur Anzeige von Textnachrichten, Standbildern und/oder Filmen, eine Aufnahmeeinheit oder ein Sensor 2, beispielsweise eine Kamera und/oder ein Mikrofon, und eine Ausgabeeinheit 3, beispielsweise ein Lautsprechersystem, dargestellt.

Weiter ist ein Rechensystem 4 gezeigt, das insbesondere als virtueller oder physischer Server ausgebildet sein kann. Das Rechensystem 4 kann cloudbasiert sein und virtualisiert auf anderen Hardwarekomponenten und Recheneinheiten ausgeführt werden. Das Rechensystem 4 kann speziell für die erforderlichen Zwecke konstruiert sein oder es kann ein Allzweck-Computer sein der durch ein in dem Rechensystem 4 gespeichertes Computerprogramm konfiguriert und/oder gesteuert wird. Ein solches Computerprogramm kann in einem computerlesbaren Speichermedium gespeichert sein, wie zum Beispiel, aber nicht beschränkt auf, jede Art von Speicherplatte, einschließlich Disketten, optische Platten, CD-ROMs und magnetooptischen Platten, Festwertspeichern (ROMs ), Direktzugriffsspeicher (RAMs), EPROMs, EEPROMs, magnetische oder optische Karten oder jede Art von Medien, die sich zum Speichern elektronischer Anweisungen eignen. Diese können an einen Bus des Rechensystems 4 gekoppelt sein.

Das präsentierte Verfahren bezieht sich nicht inhärent auf ein bestimmtes Rechensystem 4. Verschiedene Allzwecksysteme können mit Programmen verwendet werden, oder es kann sich als praktisch erweisen, eine spezialisierte Vorrichtung für das gewünschte Verfahren zu konstruieren. Beispielsweise kann das Verfahren gemäß der vorliegenden Erfindung mittels fest verdrahteter Schaltungen, durch Programmieren eines Allzweckprozessors oder durch eine Kombination von Hardware und Software implementiert werden. Die Erfindung kann mit Handgeräten, Multiprozessorsystemen, CPUs, GPUs oder programmierbarer Verbraucherelektronik, Netzwerk-PCs, Minicomputer, Mainframe-Computern und anderen ausgeführt werden. Die Erfindung kann auch in verteilten Rechenumgebungen, in denen Aufgaben durch verschiedene Verarbeitungsvorrichtungen über ein drahtgebundenes oder drahtloses Kommunikationsnetzwerk verbunden sind, ausgeführt werden.

Die erfindungsgemäße übergeordnete Anwendungsprogrammierungsschnittstelle 5, die vorzugsweise auf dem Rechensystem 4 ausgeführt wird, dient nun dazu, einen Zugang und insbesondere einen Datenaustausch zwischen den Infrastruktursystemen 1, 2, 3, die hier innerhalb eines durch die Stadionumgebung definierten Bereichs 6 angeordnet sind, herzustellen. Ebenfalls stellt die übergeordnete Programmierungsschnittstelle 5 einen Zugang und insbesondere einen Datenaustausch zu softwaretechnischen Diensten 40 bereit. Exemplarisch ist ein erster softwaretechnischer Dienst P, beispielsweise ein Zahlungsdienst, ein zweiter softwaretechnischer Dienst T, beispielsweise ein Dienst für den Verkauf von Zugangsberechtigungen und insbesondere von Tickets, und ein dritter softwaretechnischer Dienst B, der insbesondere Wettdienstleistungen bereitstellt, gezeigt. Die übergeordnete Anwendungsschnittstelle erlaubt nun eine Kommunikation mit den softwaretechnischen Diensten 40. Jeder dieser softwaretechnischen Dienste 40 kann eine eigene Anwendungsprogrammierungsschnittstelle bereitstellen, die von der übergeordneten Anwendungsprogrammierungsschnittstelle zum Datenaustausch verwendet werden kann. Der erste softwaretechnische Dienst P kann folglich eine erste Anwendungsprogrammierungsschnittstelle 5P, der zweite softwaretechnische Dienst T eine zweite Anwendungsprogrammierungsschnittstelle 5T und der dritte softwaretechnische Dienst B eine dritte Anwendungsprogrammierungsschnittstelle 5B bereitstellen. Die Anwendungsprogrammierungsschnittstellen 5P, 5T, 5B werden hierein auch als von der übergeordneten Anwendungsprogrammierungsschnittstelle verschiedene Anwendungsprogrammierungsschnittstellen bezeichnet.

Ein Benutzer 7 greift nun auf die übergeordnete Anwendungsprogrammierungsschnittstelle 5 und insbesondere auf eine durch die übergeordnete Anwendungsprogrammierungsschnittstelle 5 bereitgestellte Datenbank 10 mittels eines Telekommunikationsendgeräts 8 zu. Exemplarisch ist ein mobiles Telekommunikationsendgerät in Form eines Mobiltelefons, Smartphones oder Tablets gezeigt.

Von der übergeordneten Anwendungsprogrammierungsschnittstelle 5, einer Anwendung und/oder einer Applikation, wird eine Benutzerschnittstelle 9 bereitgestellt, über die der Benutzer 7 auf die mittels der übergeordneten Anwendungsprogrammierungsschnittstelle 5 bereitgestellten Daten zugreifen kann.

Insbesondere nimmt die übergeordnete Anwendungsprogrammierschnittstelle 5 Anfragen, die von dem Benutzer 7 mittels einer Bedienoperation an dem Telekommunikationsendgerät ausgelöst werden an und setzt diese in Anfragedaten für die softwaretechnischen Dienste 40 bzw. deren Anwendungsprogrammierungsschnittstellen 5P, 5T, 5B und/oder die Infrastruktursysteme 1-3 um. Die übergeordnete Anwendungsprogrammierungsschnittstelle überträgt also Daten abgestimmt die Anwendungsprogrammierungsschnittstellen 5P, 5T, 5B der softwaretechnischen Dienste 40 oder Infrastruktursysteme 1-3 Anfragedaten.

Dabei konvertiert die übergeordnete Anwendungsprogrammierungsschnittstelle 5 die von der Benutzerschnittstelle 9 empfangenen Anfragedaten des Benutzers 7. Zunächst analysiert die übergeordnete Anwendungsprogrammierungsschnittstelle 5 die Anfragedaten, die über die Benutzerschnittstelle 9 übermittelt werden. Insbesondere werden auf Basis von in der Datenbank 10 hinterlegten Informationen die softwaretechnischen Dienste und/oder Infrastruktursysteme ermittelt, die zur Beantwortung der Anfrage, die mit den Anfragedaten übermittelt wurde, benötigt werden. Die Anfrage wird in Unteranfragen für die benötigten softwaretechnischen Dienste 40 und/oder die Infrastruktursysteme 1-3 und deren Anwendungsprogrammierungsschnittstellen 5P, 5T, 5B umgesetzt. Dabei ist zu verstehen, dass auch die Infrastruktursysteme Anwendungsprogrammierungsschnittstellen bereitstellen können, analog zu den softwaretechnischen Diensten 40 (nicht dargestellt). Die Unteranfragen werden dann an die ermittelten softwaretechnischen Dienste 40 und/oder die Infrastruktursysteme 1-3 bzw. deren Anwendungsprogrammierungsschnittstellen 5P, 5T, 5B gesendet oder übermittelt.

So kann beispielsweise eine Anfrage zum Kauf einer Zugangsberechtigung einerseits an den ersten softwaretechnischen Dienst P übermittelt werden, der Daten bezüglich eines Zahlvorgangs bereitstellt/empfängt, während der zweite softwaretechnische Dienst T Informationen über die Zugangsberechtigung an sich bereitstellt/empfängt, beispielsweise eine Verfügbarkeit von Tickets oder eine Einschränkung von Zugangsberechtigungen auf Basis des Benutzerprofils des Benutzers 7.

Im Beispiel kann die übergeordnete Anwendungsprogrammierungsschnittstelle 5 Daten von den Infrastruktursystemen 1-3 abfragen, beispielsweise Bild- oder Audiodaten von den Infrastruktursystemen 2 und 3, oder es können Daten an die Infrastruktursysteme übermittelt werden, beispielsweise an die Anzeigeeinheit 1. Die Daten können dafür von der übergeordneten Anwendungsprogrammierungsschnittstelle 5 zunächst aufbereitet und mit anderen Daten kombiniert werden. Die übergeordnete Anwendungsprogrammierungsschnittstelle kann generell auf Daten aus zumindest der Datenbank 10 zugreifen.

Die übergeordnete Anwendungsprogrammierungsschnittstelle 5 empfängt dann Antwortdaten auf die Unteranfragen und kombiniert diese so, dass sie einem Format entsprechen, das für die Ausgabe durch die übergeordnete Anwendungsprogrammierungsschnittstelle 5 definiert ist. Zudem kann die übergeordnete Anwendungsprogrammierungsschnittstelle 5 Daten in der Datenbank 10 speichern und mit weiteren Informationen anreichern. Beispielsweise können, sofern Antwortdaten auf die unteranfragen hin lediglich von dem ersten und dem zweiten softwaretechnischen Dienst P und T empfangen werden, diese mit Daten von den Infrastruktursystemen 1-3 kombiniert werden. Die so kombinierten Antwortdaten können dann zu der Benutzerschnittstelle 9 übermittelt werden, so dass eine Anzeige der gewünschten Antwortdaten auf dem Telekommunikationsgerät 8 des Benutzers 7 ausgegeben werden können.

Dabei ist zu verstehen, dass die übergeordnete Anwendungsprogrammierungsschnittstelle auch abhängig von einem Benutzerprofil des Benutzers 7 Daten von den softwaretechnischen Diensten 40 und unter den Infrastruktursystemen 1-3 sammeln und an die Benutzerschnittstelle 9 bzw. das Telekommunikationsendgerät 8 übermitteln kann. So kann zum Beispiel im Wege der sogenannten "Push"-Nachrichten Daten an die Benutzerschnittstelle 9 bzw. das Telekommunikationsendgerät 8 übermittelt werden. Beispielsweise kann der Benutzer so über aktuelle Informationen im Zusammenhang mit einer Veranstaltung versorgt werden. Dabei kann die Information abhängig davon erfolgen, ob der Benutzer 7 sich mit dem Telekommunikationsendgerät 8 innerhalb oder außerhalb des definierten Bereichs 6 befindet.

Die übergeordnete Anwendungsprogrammierungsschnittstelle 5 konvertiert also von den verschiedenen Anwendungsprogrammierungsschnittstellen 5P, 5T, 5B der softwaretechnischen Dienste 40 und/oder der Infrastruktursysteme 1-3 empfangene Daten einerseits für eine Ausgabe durch die Benutzerschnittstelle 9 oder auf dem Telekommunikationsendgerät 8, andererseits konvertiert die übergeordnete Anwendungsprogrammierungsschnittstelle 5 Daten, die von dem Telekommunikationsendgerät 8 oder die Benutzerschnittstelle 9 an die übergeordnete Anwendungsprogrammierungsschnittstelle 5 übermittelt werden für die softwaretechnischen Dienste 40 und/oder die Infrastruktursysteme 1-3. Insbesondere kann so die Ausgabe von Daten an das wenigstens eine Telekommunikationsendgerät 8 in einem einheitlichen Format erfolgen. Dabei ist zu verstehen, dass von der übergeordneten Anwendungsprogrammierungsschnittstelle 5 empfangene Daten von dieser in der Datenbank 10 in einem einheitlichen Format abgespeichert werden können. Dazu kann für die Datenbank z.B. ein Datenbankschema oder ein XML-Schema vorgegeben sein.

Die Daten der softwaretechnischen Dienste 40 können über die verschiedenen Anwendungsprogrammierungsschnittstellen 5P, 5T, 5B von der übergeordneten Anwendungsprogrammierungsschnittstelle 5 abgefragt werden oder an die übergeordnete Anwendungsprogrammierungsschnittstelle 5 gesendet werden. Auch innerhalb des definierten Bereichs 6 kann die übergeordnete Anwendungsprogrammierungsschnittstelle 5 Daten abhängig von der Lokation des Benutzers 7 bereitstellen. So können beispielsweise Informationen bezüglich einer Verpflegung (Catering) an den Benutzer übermittelt werden, wenn dieser sich in der Nähe einer entsprechenden Verkaufsstelle aufhält. Andererseits können beispielsweise benutzerspezifische Informationen (z.B. für VIP, Partner, Premium Partner, etc.) übermittelt werden, wenn der Benutzer 7 sich in einem bestimmten Bereich des Veranstaltungsorts (beispielsweise in der VIP-Lounge) aufhält. Dabei werden insbesondere die Sensoren des Telekommunikationsendgeräts genutzt.

Es ist auch zu verstehen, dass die softwaretechnischen Dienste 40 bzw. die Infrastruktursysteme 1-3 auch Daten über die übergeordnete Anwendungsprogrammierungsschnittstelle abfragen können. So kann beispielsweise auf der Anzeigeeinheit 1 in dem definierten Bereich 6 eine benutzerabhängige Information angezeigt werden. Zum Beispiel kann die Anzeigeeinheit 1 über die übergeordnete Anwendungsprogrammierungsschnittstelle 5 auf Daten zugreifen, um beispielsweise eine Anzahl von Besuchern, ein Durchschnittsalter der Besucher, eine Zuordnung der Besucher zu einer Mannschaft usw. darzustellen.

Auch die softwaretechnischen Dienste können auf die und über die übergeordnete Anwendungsprogrammierungsschnittstelle zugreifen, um Daten mit dieser auszutauschen und insbesondere Datenbankabfragen an die Datenbank 10 vorzunehmen oder auf die Infrastruktursysteme zuzugreifen. So kann zum Beispiel gesteuert über die übergeordnete Anwendungsprogrammierungsschnittstelle 5 der erste softwaretechnische Dienst P auf das Infrastruktursystem 3 zugreifen, um beispielsweise eine Werbebotschaft auszugeben.

Die Infrastruktursysteme 1-3 können Medientechnikgeräte sein. Bei den softwaretechnischen Diensten 40 handelt es sich insbesondere um Merchandising-Dienste, Ticketing-Dienste, Social-Media-Dienste, Spieledienste, Telekommunikationsdienste, Lokalisationsdienste, Musik-Dienste, Videostreaming-Dienste, Wettdienste, Statistikdienste, Bezahldienste und/oder Registrierungsdienste.

So kann sich der Benutzer 7 beispielsweise an dem Datenverarbeitungssystem 100 mittels eines Registrierungsdienstes außerhalb des definierten Bereichs 6 registrieren, um dann vor Ort innerhalb des definierten Bereichs 6 auf das Datenverarbeitungssystem 100 zugreifen zu können.

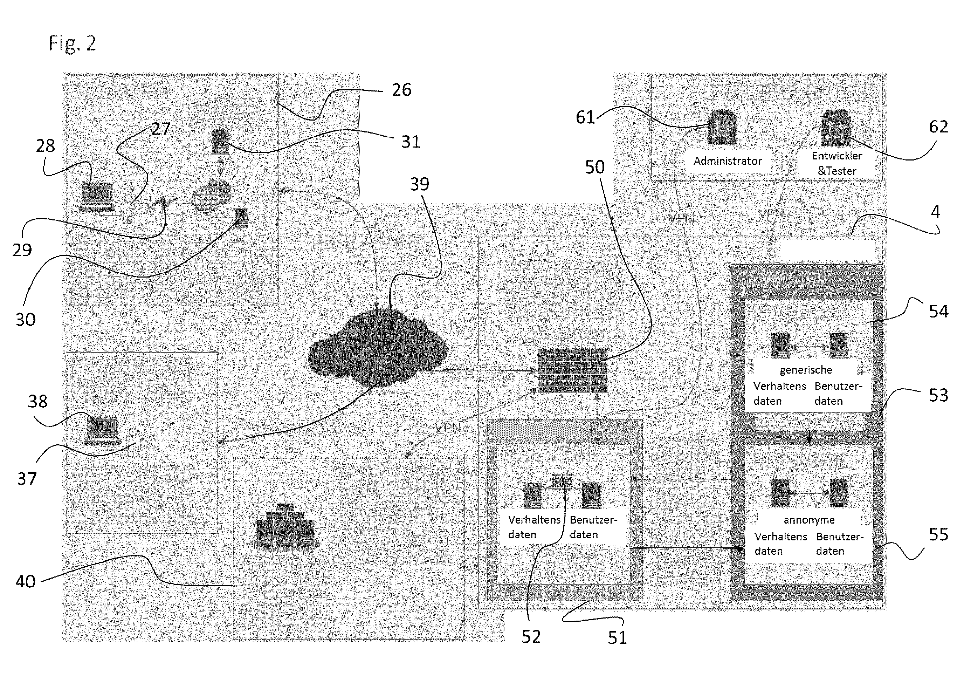

Mit Blick auf Fig. 2 wird nun eine weitere beispielhafte Teilansicht bzw. ergänzende Komponenten für das in Fig. 1 gezeigte Datenverarbeitungssystem 100 beschrieben.

Zunächst ist wiederum ein begrenzter Bereich 26 gezeigt, der beispielsweise einen Veranstaltungsort definiert. Ein Benutzer 27 innerhalb des definierten Bereichs greift mittels eines Telekommunikationsendgeräts 28 auf das Rechensystem 4 zu. Wie bereits bemerkt, kann das Rechensystem 4 mehrere Recheneinheiten umfassen, die verschiedene funktionale Aufgaben erfüllen können. So können beispielsweise Datenbankserver, Firewall-Vorrichtungen und andere Recheneinheiten integriert sein.

Der Benutzer 27 greift mittels des Telekommunikationsendgeräts 28 innerhalb des definierten Bereichs 26, beispielsweise über ein Funknetzwerk 29 auf die übergeordnete Anwendungsprogrammierungsschnittstelle 5 zu. Bei dem Telekommunikationsendgerät 28, das im Wesentlichen dem Telekommunikationsendgerät 8 entspricht, kann es sich um ein Telekommunikationsendgerät handeln, das beispielsweise unter IOS, Android, Windows Phone oder einem anderen Betriebssystem betrieben wird.

Der Zugriff durch das Telekommunikationsendgerät 28 auf das Rechensystem 4 kann dabei indirekt erfolgen, d.h. dass insbesondere Zwischenspeicher 30 (Proxy-Server) vorgesehen sein können, die Daten Zwischenspeichern, bei denen es sich vorzugsweise um statische Daten handelt, die sich selten ändern und vorzugsweise keinen Echtzeitänderungen unterliegen. Durch die Zwischenspeicher 30 kann ein Zugriff auf Daten, die nicht lokal vorliegen beschleunigt werden. Zudem können lokale Recheneinheiten 31 vorgesehen sein, die lediglich innerhalb des definierten Bereichs 6 vorhanden und zugreifbar sind.

Weiter ist ein weiterer Benutzer 37 gezeigt, der außerhalb des definierten Bereichs mittels eines Kommunikationsendgeräts 38 auf das Rechensystem 4 zugreifen kann. Auch das Telekommunikationsendgerät 38 des Benutzers 37 kann unter einem mobilen Betriebssystem wie beispielsweise Android, IOS, Windows oder einem anderen Betriebssystem betrieben werden.

Sowohl der Zugriff des Benutzers 27 als auch der Zugriff des weiteren Benutzers 37 können dabei auch über öffentliche Netzwerke, wie beispielsweise das Internet 39 oder Telefonnetze erfolgen. Der Datenaustausch zwischen dem Telekommunikationsendgerät 28 in dem definierten Bereich 26 sowie dem Kommunikationsendgerät 38 außerhalb des definierten Bereiches 26 mit dem Rechensystem 4 können dabei entweder unter Echtzeitbedingungen, kontinuierlich oder zu bestimmten Zeiten ("scheduled") erfolgen.

Wie ebenfalls gezeigt ist, sind mit dem Rechensystem 4 die softwaretechnischen Dienste 40 verbunden, die beispielsweise über eine gesicherte Verbindung (Virtual Private Network, VPN) an das Rechensystem 4 angebunden sind. Die softwaretechnischen Dienste 40 stellen wiederum die verschiedenen Anwendungsprogrammierungsschnittstellen 5P, 5T, 5B bereit, insbesondere für Wettdienstleistungen, Statistikdienstleistungen, Zahlungsdienstleistungen, Registrierungsdienstleistungen und/oder lokationsabhängige Dienstleistungen.

Der Zugriff auf das Rechensystem 4 kann durch Sicherungsmittel 50 und insbesondere einem Firewall-System geschützt sein. Auch können generell kryptographisch gesicherte bzw. verschlüsselte Verbindungen zur Aufnahme einer Kommunikation vorausgesetzt werden.

Das Rechensystem 4 kann wiederum in mehrere Module unterteilt sein. Ein erstes Modul 51 ist dabei als öffentliches Modul durch die Benutzer 27,37 bzw. mittels Zugriff über die Telekommunikationsendgeräte 28, 38 zugreifbar. Der Zugriff auf die in dem ersten Modul 51 gespeicherten Benutzerdaten bzw. Verhaltensdaten kann über weitere Sicherungsmittel 52 erfolgen. Bei diesen Daten kann es sich insbesondere um Echtzeitdaten handeln, die kontinuierlich aktualisiert werden und auf Anfrage der Benutzer 27, 37 bzw. auf eine über die Telekommunikationsendgeräte 28, 38 abgesendete Anfrage hin an die Telekommunikationsendgeräte 28, 38 übersendet werden.

Als zweites Modul 53 kann in dem Rechensystem 4 ein Entwicklungsmodul vorgesehen sein. Hier kann die Funktionalität des ersten Moduls 51 bzw. das erste Modul 51 entwickelt und getestet werden. Die Entwicklung erfolgt dabei beispielsweise auf Basis generischer Benutzer und Verhaltensdaten, während ein Test des ersten Moduls 51 mit anonymisierten Verhaltens- und Benutzerdaten erfolgen kann. Der Entwicklungsprozess ist in einem ersten Untermodul 54 veranschaulicht, während der Testprozess durch ein zweites Untermodul 55 dargestellt ist. Ein anonymisieren der Benutzer- bzw. Verhaltensdaten erfolgt beispielsweise dann, wenn für Testzwecke Daten aus dem ersten Modul 51 in die Testumgebung des zweiten Untermoduls 55 übernommen werden. Die Funktionalitäten des ersten Moduls 51 können dann durch eine Übertragung von Funktionalitäten aus dem zweiten Untermodul 55 (getestete Funktionalität) verändert und aktualisiert werden.

Ein optionaler Zugang durch Administratoren bzw. Entwickler ist weiter möglich und insbesondere ebenfalls über gesicherte Verbindungen (VPN). Exemplarisch sind Entwickler- und Administrationssysteme 61 und 62 gezeigt, die einen Zugriff durch die Administratoren und/oder Entwickler erlauben.

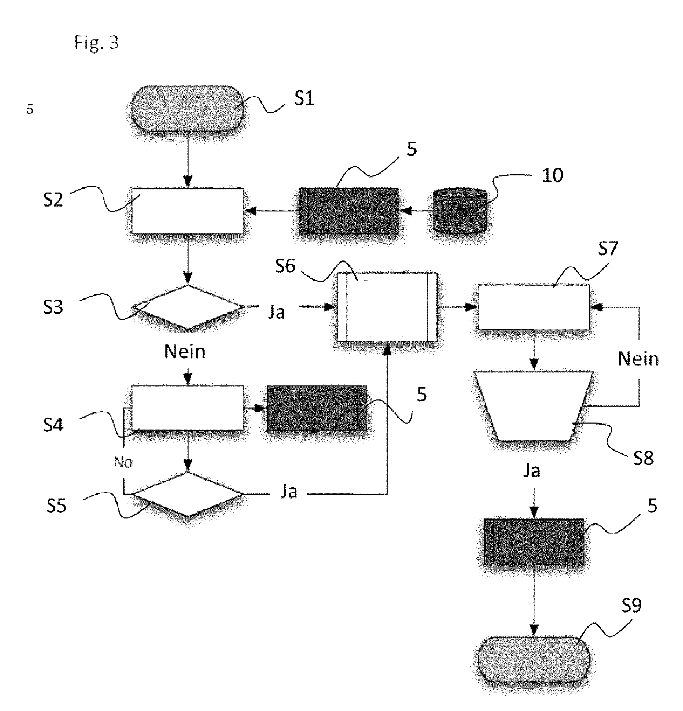

In Fig.3 ist nun ein Beispiel für einen Zugriff auf das erfindungsgemäße Computersystem 100 gezeigt. Die Benutzerschnittstelle 9 kann dabei insbesondere eine softwaretechnische Applikation ("App") sein, die auf dem Telekommunikationsendgerät 8, 28, 38 ausgeführt wird. So kann die Benutzerschnittstelle 9 beispielsweise in einem Schritt S1 gestartet werden.

In einem zweiten Schritt S2 erfolgt eine Authentifizierung des Benutzers 7, 27, 37, d.h. es wird geprüft, ob der Benutzer auf das Datenverarbeitungssystem 100 bzw. die übergeordnete Anwendungsprogrammierungsschnittstelle 5 zugreifen und damit Daten der Datenbank 10 auslesen kann.

Zum Zweck der Authentifizierung des Benutzers 7, 27, 37 kann die Benutzerschnittstelle 9 Daten an die übergeordnete Anwendungsprogrammierungsschnittstelle 5 übermitteln. Mittels der Datenbank 10 kann die übergeordnete Anwendungsprogrammierungsschnittstelle 5 prüfen, ob der Benutzer 7, 27, 37 zugriffsberechtigt ist. Statt der Datenbank 10 können auch softwaretechnische Dienste 40 von der übergeordneten Anwendungsprogrammierungsschnittstelle 5 abgefragt werden.

Ist eine Authentifizierung in einem Schritt S4 nicht der möglich, so kann der Benutzer 7, 27, 37 an dem Datenverarbeitungssystem 100 registriert werden, insbesondere unter Verwendung der übergeordneten Anwendungsprogrammierungsschnittstelle 5. Nach einem optionalen Verifizierungsschritt in einem Schritt S5, wird der Benutzer zu einer Startbildschirm der Benutzerschnittstelle geleitet (Schritt S6), von dem aus er z.B. automatisch in einem Schritt S7 zu einer möglicherweise durch den Benutzer voreingestellten Ansicht gelangt.

Wird der Benutzer 7, 27, 37 nun in einem Schritt S8 aktiv, d.h. er führt eine Bedienoperation auf der Benutzerschnittstelle 9 aus, so wertet die übergeordnete Anwendungsprogrammierungsschnittstelle 5 die dadurch ausgelöste Anfrage aus und stellt unter Einbeziehung der softwaretechnischen Dienste 40 und/oder der Infrastruktursysteme 1-3 Antwortdaten bereit.

Führt der Benutzer 7, 27,37 keine Bedienoperation auf der Benutzerschnittstelle 9 aus, so verbleibt er auf der voreingestellten Ansicht in Schritt S7.

In einem Schritt S9 kann die Benutzerschnittstelle 9 beendet werden.

Dabei ist zu verstehen, dass die auf dem Telekommunikationsgerät 8, 28, 38 ausgeführte Benutzerschnittstelle 9 Teil des Datenverarbeitungssystems 100 sein kann.

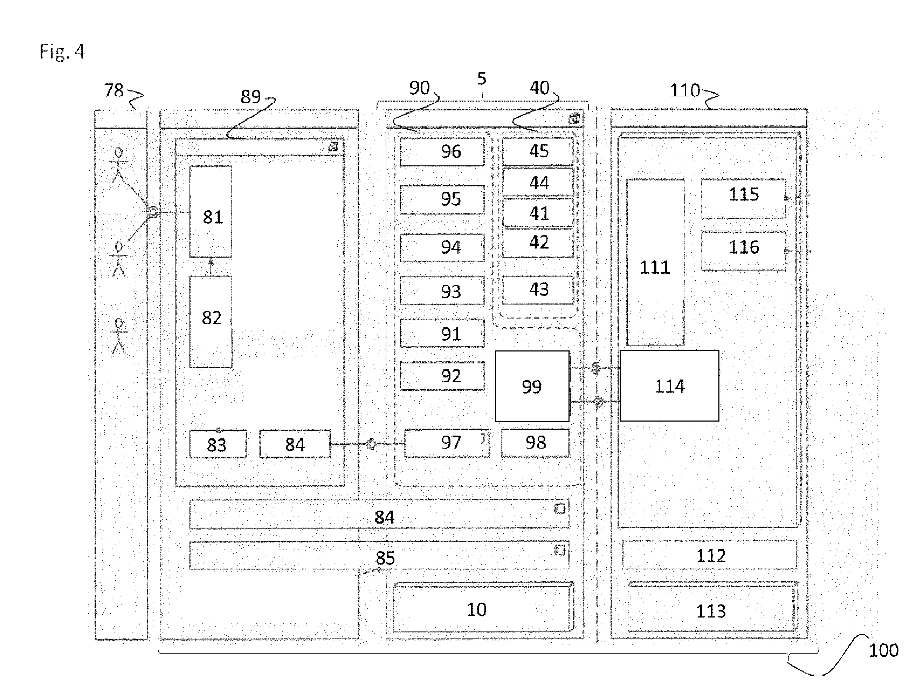

Fig. 4 zeigt eine weitere Teilansicht des Datenverarbeitungssystems 100. Zunächst sind Benutzer 78 gezeigt, die mit Telekommunikationsendgeräten auf das Datenverarbeitungssystem 100 zugreifen.

Zudem ist eine Benutzerschnittstelle 89 dargestellt. Diese kann eine Benutzerschnittstellen-Anwendungsprogrammierungsschnittstelle 81 umfassen, die beispielsweise zur Kommunikation zwischen der Benutzerschnittstelle und den Benutzern 78 und der Bedienung einer Webapplikation 82 dient. Insbesondere kann diese Benutzerschnittstellen-Anwendungsprogrammierungsschnittstelle 81 dynamische Ajax-, JSON- und/oder Javascript- Techniken einsetzen. Sie kann weiter statische und dynamische Inhalte darstellen und insbesondere Daten von und über die übergeordnete Anwendungsprogrammierungsschnittstelle 5 abrufen.

Um eine effiziente Kommunikation zu erlauben, kann die Benutzerschnittstelle 89 eine sogenannte Message-Cue 83 aufweisen, d.h. einen Nachrichtenspeicher, der Anfragedaten, die von dem Benutzer eingegeben werden, zwischenspeichert. Insbesondere können die wesentlichen Benutzerschnittstellenkomponenten auf einem Server vorgehalten werden und lediglich die Anzeige kann auf dem Telekommunikationsendgerät ausgegeben werden.

Die Benutzerschnittstelle 89 kann mit der übergeordneten Anwendungsprogrammierungsschnittstelle 5 mittels einer "Manager Anwendungsprogrammierungsschnittstelle client" 84 und einer vorzugsweise durch die übergeordnete Anwendungsprogrammierungsschnittstelle 5 implementierte Web-Anwendungsprogrammierungsschnittstelle (Web API) 97 kommunizieren. Die Benutzerschnittstelle 89 greift auf die übergeordnete Anwendungsprogrammierungsschnittstelle 5 über die "Manager API dient" zu.

Die Funktion der übergeordneten Anwendungsprogrammierungsschnittstelle 5 ist nun detaillierter dargestellt. Die übergeordnete Anwendungsprogrammierschnittstelle erlaubt den Datenaustausch mit softwaretechnischen Diensten 40 (z.B. SMS- und Email-Dienste 41, Instant Messaging- und Benachrichtigungs-Dienste 42 und/oder Payment-Dienste 43) und weist zudem Möglichkeiten zur Kommunikation mit Hintergrundprozessen 44 und zwischengespeicherten Daten Anfragedaten 45 auf.

Zudem kann die übergeordnete Anwendungsprogrammierungsschnittstelle 5 auch selbst Daten 90 bereitstellen, die beispielsweise eine Einstellung der Benutzerschnittstelle 91, die Bereitstellung verschiedener Bereiche wie einem Club-Bereich 92 (Abgeschlossener Bereich für bestimmte Benutzer), einem Fanpit-Breich 93 (Bereich für bestimmte Benutzer, die sich einer Fangruppe zuordnen lassen), einem Fanbox-Bereich 94 (Bereich für die Kommunikation mit anderen Benutzern), einen Abstimmungs-Bereich 95, sowie einen News-Bereich 96 (in dem Informationen zu einer Veranstaltung bereitgestellt werden) betreffen können. Zudem können Benutzerdaten 98 bereitgestellt werden.

Die von der übergeordneten Anwendungsprogrammierungsschnittstelle 5 bereitgestellten Daten können insbesondere unter Verwendung der Datenbank 10 bereitgestellt werden, wobei die übergeordnete Anwendungsprogrammierschnittstelle 5 hier exemplarisch auch auf ein "Content Delivery Network" (CDN) 84 sowie verschiedene Zwischenspeicher-Funktionen 85 (Cashing) zugreifen kann, um Daten bereitzustellen und auszutauschen. Die Benutzerschnittstelle 89 kann ebenfalls auf das CDN 84 und/oder Zwischenspeicher-Funktionen 85 zugreifen. Somit können das CDN 84 und/oder Zwischenspeicher-Funktionen 85 ebenfalls zum Datenaustausch zwischen der Benutzerschnittstelle 89 und der übergeordneten Anwendungsprogrammierungsschnittstelle 5 eingesetzt werden.

Weiter kann die übergeordnete Anwendungsprogrammierungsschnittstelle 5 Daten und Konfigurationsinformationen mit einem Konfigurationsmodul 110 austauschen. Das Konfigurationsmodul 110 kann ebenfalls eine graphische Benutzerschnittstelle, insbesondere eine Weboberfläche bereitstellen und auf Eingaben an einer Konfigurations-Anwendungsprogrammierungsschnittstelle 111 die Funktionalität der übergeordneten Anwendungsprogrammierungsschnittstelle 5 verändern und insbesondere abhängig von einer Veranstaltung oder einem Ereignis definieren. Auch das Konfigurationsmodul 110 kann Zwischenspeicher-Funktionen 112 (Cashing) sowie Datenbankfunktionen 113 aufweisen und auf solche zugreifen. Zudem kann eine Kommunikation zwischen der übergeordneten Anwendungsprogrammierungsschnittstelle 5 und dem Konfigurationsmodul 110 über Schnittstellen 99, auf Seiten der übergeordneten Anwendungsprogrammierungsschnittstelle 5, und 114, auf Seiten des Konfigurationsmoduls 110, erfolgen.

Das Konfigurationsmodul 110 kann weiter eine Benutzerkonfiguration 115 und eine Veranstaltungskonfiguration 116 verwalten und für den Zugriff durch z.B. einen Administrator bereitstellen.

Es ist zu verstehen, dass gemäß der oben genannten Ausführungsbeispiele der Erfindung, das offenbarte System bzw. die Vorrichtung und das Verfahren auch auf andere Weise implementiert werden können. Zum Beispiel ist das beschriebene Computersystem lediglich beispielhaft. Die Aufteilung der Einheiten, Module und Komponenten basiert lediglich auf logischen Funktionen und können in der Praxis gemäß anderer Ansätze aufgeteilt werden. Zum Beispiel können mehrere Komponenten oder Module kombiniert werden oder in ein anderes System integriert werden, oder einige Merkmale können weggelassen oder nicht implementiert werden. Zusätzlich können die dargestellten oder diskutierten Verbindungen und Datenströme direkte Verbindungen sein bzw. die Daten können direkt übertragen werden oder Kommunikationsverbindungen können zwischen individuellen Komponenten über indirekte Kopplungen oder Kommunikationsverbindungen zwischen einigen Schnittstellen, Geräten oder Einheiten implementiert werden, welche elektrisch, mechanisch oder in anderer Form ausgebildet sein können.

Die separaten Komponenten, Module und Einheiten können physikalisch getrennt sein oder die nicht als Einheiten gezeigten Komponenten können physikalische Einheiten sein, d.h. die Einheiten können an einem Ort lokalisiert sein oder können auf mehrere Orte und vernetzt verteilt sein. Die gesamten Systeme und Einheiten, oder Teile davon, können basierend auf tatsächlichen Notwendigkeiten ausgewählt sein, Lösungen gemäß der Ausführungsbeispiele der Erfindung zu implementieren. Zusätzlich können individuelle Funktionseinheiten gemäß der Ausführungsbeispiele der Erfindung in der Datenverarbeitungseinheit integriert sein oder Einheiten können separat vorgesehen oder auf zwei oder mehrere Einheiten aufgeteilt sein und dort integriert sein. Die integrierten Einheiten können in Form von Hardware- oder Software-Einheiten implementiert sein.

Die Funktionen in Form von Softwareeinheiten können auch separat vorgesehen sein. Die Softwareeinheiten können dann auch auf computerlesbaren Speichermedien gespeichert sein. Insbesondere kann auf ein Speichermedium ein computerimplementiertes Programm gespeichert sein, das bei seiner Ausführung auf einem Rechner bzw. einem Computer ein Verfahren gemäß der Erfindung durchführt. Basierend auf einem solchen Verständnis können die technischen Lösungen der oben beschriebenen Ausführungsbeispiele in Form eines Computersoftwareprodukts ausgeführt sein. Das Computergerät, das beispielsweise ein PC, Server, Netzwerkgerät oder ähnliches sein kann, kann alle oder Teile der Schritte des beschriebenen Verfahrens gemäß der Ausführungsbeispiele implementieren. Das vorgenannte Speichermedium kann durch verschiedene Medien realisiert sein, die den Programmcode speichern können. So kann zum Beispiel eine USB-Disk, eine mobile Festplatte, eine nur Lese-Speicher-Einheit, ein Flash-Speicher, ein Random-Access-Memory (RAM) Speicher, Read-Only-Memory (ROM) Speicher, ein Magnetspeicher oder ein optischer Speicher zum Einsatz kommen.

## Patentansprüche

1. Datenverarbeitungssystem (100) zum Verbinden wenigstens eines Telekommunikationsendgeräts (8) mit Infrastruktursystemen (1), insbesondere Veranstaltungsinfrastruktursystemen, aufweisend ein Server (4), auf dem eine übergeordnete Anwendungsprogrammierungsschnittstelle (5) implementiert ist,
wobei die übergeordnete Anwendungsprogrammierungsschnittstelle (5) dazu eingerichtet ist, einen Zugang zu wenigstens einem Teil der Infrastruktursysteme (1), die innerhalb eines definierten Bereichs (6) vorgesehen sind, und/oder zu softwaretechnischen Diensten (40), die mittels verschiedener Anwendungsprogrammierungsschnittstellen (5P, 5T, 5B) bereitgestellt sind, bereitzustellen, wobei der Zugang für einen Zugriff ausgehend von dem wenigstens einen, insbesondere mobilen, Telekommunikationsendgerät (8) ausgestaltet ist, und wobei die übergeordnete Anwendungsprogrammierungsschnittstelle (5) dazu eingerichtet ist, Daten zur Ausgabe an die verschiedenen Anwendungsprogrammierungsschnittstellen (5P, 5T, 5B), die Infrastruktursysteme und/oder das wenigstens eine Telekommunikationsendgerät (8) zu konvertieren, wobei die übergeordnete Anwendungsprogrammierungsschnittstelle dazu eingerichtet ist, an das wenigstens eine Telekommunikationsendgerät (8) auszugebende Daten in ein einheitliches Format zu konvertieren.

2. Datenverarbeitungssystem (100) nach Anspruch 1, wobei die übergeordnete Anwendungsprogrammierungsschnittstelle (5) dazu eingerichtet ist, den Zugang für das wenigstens eine Telekommunikationsendgerät (8) innerhalb und außerhalb des definierten Bereichs (6) bereitzustellen.

3. Datenverarbeitungssystem (100) nach Anspruch 1 oder 2, wobei die übergeordnete Anwendungsprogrammierungsschnittstelle (5) dazu eingerichtet ist, den Zugang zu den softwaretechnischen Diensten (40) und/oder den Infrastruktursystemen (1) selektiv bereitzustellen und insbesondere abhängig davon, ob das wenigstens eine Telekommunikationsendgerät (8) von innerhalb oder außerhalb des definierten Bereichs (6) zugreift.

4. Datenverarbeitungssystem (100) nach einem der vorgehenden Ansprüche, wobei die übergeordnete Anwendungsprogrammierungsschnittstelle (5) dazu eingerichtet ist, Daten von den verschiedenen Anwendungsprogrammierungsschnittstellen (5P, 5T, 5B), den Infrastruktursystemen (1) und/oder dem wenigstens einen Telekommunikationsendgerät (8) zu empfangen und/oder Daten an die verschiedenen Anwendungsprogrammierungsschnittstellen (5P, 5T, 5B), die Infrastruktursysteme (1) und/oder das wenigstens eine Telekommunikationsendgerät (8) zu senden.

5. Datenverarbeitungssystem (100) nach einem der vorgehenden Ansprüche, wobei die übergeordnete Anwendungsprogrammierungsschnittstelle (5) dazu eingerichtet ist, den Zugang zu den softwaretechnischen Diensten (40) und/oder den Infrastruktursystemen (8) abhängig von der Lokation des wenigstens einen Telekommunikationsendgeräts (8), insbesondere innerhalb des definierten Bereichs (6), bereitzustellen.

6. Datenverarbeitungssystem (100) nach einem der vorgehenden Ansprüche, wobei die übergeordnete Anwendungsprogrammierungsschnittstelle (5) dazu eingerichtet ist, Daten von dem wenigstens einen Telekommunikationsendgerät (8), den Infrastruktursystemen (1) und/oder den verschiedenen Anwendungsprogrammierungsschnittstellen (5P, 5T, 5B) zu verarbeiten und/oder die Daten mit zusätzlichen Informationen zu kombinieren und vorzugsweise als einheitliche Datenbasis bereitzustellen.

7. Datenverarbeitungssystem (100) nach einem der vorgehenden Ansprüche, wobei die übergeordnete Anwendungsprogrammierungsschnittstelle (5) dazu eingerichtet ist, Daten an das wenigstens eine Telekommunikationsendgerät (8) in Echtzeit auszugeben.

8. Datenverarbeitungssystem (100) nach einem der vorgehenden Ansprüche, wobei die übergeordnete Anwendungsprogrammierungsschnittstelle (5) dazu eingerichtet ist, Daten mit den verschiedenen Anwendungsprogrammierungsschnittstellen (5P, 5T, 5B) zu bestimmten Zeitpunkten auszutauschen und insbesondere abzugleichen.

9. Datenverarbeitungssystem (100) nach einem der vorgehenden Ansprüche, wobei das Datenverarbeitungssystem (100) wenigstens eine Applikation umfasst, die auf dem wenigsten einen mobilen Telekommunikationsendgerät (8) ausführbar ist, insbesondere zur Wiedergabe der von der übergeordneten Anwendungsprogrammierungsschnittstelle (5) bereitgestellten Daten.

10. Datenverarbeitungssystem (100) nach einem der vorgehenden Ansprüche, wobei die Infrastruktursysteme (1) Anzeigegeräte, Sensoren, und/oder Ausgabegeräte umfassen.

11. Datenverarbeitungssystem (100) nach einem der vorgehenden Ansprüche, wobei die softwaretechnischen Dienste (40) Merchandising-Dienste, Ticketing-Dienste, Social-Media-Dienste, Spiele-Dienste, Telekommunikations-Dienste, Lokations-Dienste, Video Streaming-Dienste, Wett-Dienste, Statistik-Dienste, Bezahl-Dienste und/oder Registrierungs-Dienste umfassen.

12. Datenverarbeitungssystem (100) nach einem der vorgehenden Ansprüche, wobei das wenigstens eine Telekommunikationsendgerät (8) ein Smartphone, ein Tablet und/oder ein Laptop ist.

13. Verfahren zum Verbinden wenigstens eines Telekommunikationsendgeräts (8) mit Infrastruktursystemen (1), insbesondere Veranstaltungsinfrastruktursystemen,
wobei eine übergeordnete Anwendungsprogrammierungsschnittstelle (5) eines Datenverarbeitungssystems (100) einen Zugang zu wenigstens einem Teil der Infrastruktursysteme (1), die innerhalb eines definierten Bereichs (6) vorgesehen sind, und/oder zu softwaretechnischen Diensten (40), die mittels verschiedener Anwendungsprogrammierungsschnittstellen (5P, 5T, 5B) bereitgestellt werden, bereitstellt, wobei der Zugang für einen Zugriff von den insbesondere mobilen Telekommunikationsendgeräten (8) ausgestaltet ist, und wobei die übergeordnete Anwendungsprogrammierungsschnittstelle (5) Daten zur Ausgabe an die verschiedenen Anwendungsprogrammierungsschnittstellen (5P, 5T, 5B), die Infrastruktursysteme (1) und/oder das wenigstens eine Telekommunikationsendgerät (8) konvertiert, wobei die an das wenigstens eine Telekommunikationsendgerät (8) auszugebenden Daten in ein einheitliches Format konvertiert werden.

14. Computerlesbares Medium, auf dem ein Computerprogrammprodukt gespeichert ist, das bei Ausführung durch ein Datenverarbeitungssystem (100) ein Verfahren nach Anspruch 13 ausführt.
